# EUROPEAN PATENT APPLICATION

(11) **EP 4 742 131 A1**
(43) Date of publication of application: **13.05.2026**
(21) Application number: 24306866.5
(22) Date of filing: 06.11.2024
(51) Int. Cl.: G06Q 20/20, G06Q 20/32, G06Q 20/38

(54) **METHOD FOR DIRECT ACCOUNT-TO-ACCOUNT PAYMENT**

(71) Applicant: Worldline, 92800 Puteaux (FR)
(72) Inventor: Rützler, Martin, 12384 Breitenfurt bei Wien (AT); Bergaplass, Magnus, 8134 Adliswil (CH); Kumar, Vishal, 47800 Krefeld (DE); Hausknotz Christine, 2345 Brunn am Gebirge (AT); Colnaghi, Luca, 20841 Carate Brianza (MB) (IT)
(74) Representative: Germain Maureau

(57) **Abstract**

The present invention relates to a method for direct account-to-account payment from a first account of a user to a second account of a merchant, characterized it comprises performing steps of:
(a) Receiving, from a payment terminal (2b) of the merchant and/or a mobile terminal (2a) of the user, payment data comprising at least at amount and an identification of the second account;
(b) Requesting, at the mobile terminal (2a), consent of the user to perform the payment;
(c) Receiving in response, from the mobile terminal (2a), a consent token, said consent token being signed by the mobile terminal and containing at least an identification of the first account;
(d) Sending to a first server (1a) of the first bank a transfer request comprising the payment data and said consent token

## Description

### GENERAL TECHNICAL AREA

The present invention relates to the field of payment transactions. More specifically, it concerns a method for direct account-to-account payment.

### STATE OF THE ART

Account-to-Account (A2A) payments are a new type of payment wherein money is directly moved from one account to another without the need for additional intermediaries or payment instruments, such as cards.

A2A payments fall under two categories: the commonly known bank-to-bank payments and those powered by Open Banking, which allows for financial data to be shared between banks and third-party service providers through the use of application programming interfaces (APIs).

Lots of techniques are known, see for instance the document US 11935028.

On in-store environment, it has thus been proposed to scan a QR code displayed by a POS of the merchant to automatically initiate a A2A payment to the merchant.

However, in Europe, the revised Payment Services Directive (PSD2) for open banking introduced a number of new services, definitions, and obligations for market participants, which put big hurdles for the secure use of A2A on such an in-store environment.

In particular:
1. after scanning the QR code, the user has to be redirected to an e-banking page and to log-in by manually entering one's credential (account identifier).
2. For doing the strong customer authentication (SCA) as required by PSD2 the user is further redirected to the authentication app of the bank, i.e. the SCA must be done with a different mean/device/app than the login to the e-banking environment.

This standard user experience is too complex and too cumbersome to be widely adopted. Therefore, there is a need for a seamless and frictionless user experience while maintaining the highest security and complying with all the existing requirements.

The present invention improves the situation.

### PRESENTATION OF THE INVENTION

The present invention therefore relates, according to a first aspect, to a method for direct account-to-account payment from a first account of a user to a second account of a merchant, said first account being opened at a first bank operating a first server, characterized it comprises performing, by a data processing unit of a payment server connected through a network to the first server, a mobile terminal of the user and a payment terminal of the merchant, steps of:
(a) Receiving, from the payment terminal and/or the mobile terminal, payment data comprising at least at amount and an identification of the second account;
(b) Requesting, at the mobile terminal, consent of the user to perform the payment;
(c) Receiving in response, from the mobile terminal, a consent token, said consent token being signed by the mobile terminal and containing at least an identification of the first account;
(d) Sending to the first server a transfer request comprising the payment data and said consent token.

According to non-limiting features,
Said payment data are received at step (a) from the mobile terminal.

Step (a) comprises transferring said payment data from the payment terminal to the mobile terminal via a short-range communication, in particular an optical communication.

Said payment data is displayed at the payment terminal encoded in a QR code, which is scanned by the mobile terminal.

Step (a) further comprises checking the payment data with the payment terminal.

Step (b) comprises requesting the user to authenticate on the mobile terminal (2a) to prove consent to perform the payment.

Said consent token is generated by the mobile terminal upon strong authentication of the user.

Said consent token further comprises a result of said strong authentication.

The method comprises a step (e), performed by a data processing unit of the first server, of verifying said consent token, comprising verifying the signature.

Verifying said consent token comprises comparing the identification of the first account contained in the consent token with an expected identification of the first account.

The consent token is further encrypted with a public key of said first bank, step (e) firstly comprising decrypting said consent token

The method comprises a step (f) performed by the data processing unit of the first server, of performing the transfer from the first account as identified by the consent token to the second account as identified in the payment data.

The method comprises a step (g) of receiving a transfer confirmation and notifying the payment terminal and/or the mobile terminal.

According to a second aspect, the present invention proposes a payment server, characterized it comprises a data processing unit configured to:
- Receive, from a payment terminal of a merchant and/or a mobile terminal of a user, payment data for direct account-to-account payment from a first account of the user to a second account of the merchant comprising at least at amount and an identification of the second account, said first account being opened at a first bank operating a first server, the payment server being connected through a network to the first server, the mobile terminal and the payment terminal;
- Request, at the mobile terminal, consent of the user to perform the payment;
- Receive in response, from the mobile terminal, a consent token, said consent token being signed by the mobile terminal and containing at least an identification of the first account;
- Send to the first server a transfer request comprising the payment data and said consent token.

According to a third aspect, the present invention proposes a system of a payment server according to the second aspect and the first server of the bank, wherein the first server comprises a data processing unit configured to:
- verify said consent token;
- perform the transfer from the first account as identified by the consent token to the second account as identified in the payment data.

According to a fourth and a fifth aspects, the present invention proposes a computer program product comprising code instructions for executing a method according to the first aspect for direct account-to-account payment from a first account of a user to a second account of a merchant; and a storage medium readable by computer equipment on which is recorded a computer program product comprising code instructions for executing a method according to the first aspect for direct account-to-account payment from a first account of a user to a second account of a merchant.

### PRESENTATION OF FIGURES

Other features and advantages of the present invention will become apparent from the following description of a preferred embodiment. This description will be given with reference to the attached drawings in which:
[Fig. 1] Figure 1 is a diagram of a system for implementing the process according to the invention;
[Fig. 2] Figure 2 is a flow chart illustrating the steps in one embodiment of the method according to the invention;
[Fig. 3] Figure 3 shows schematically the implementation of a preferred embodiment of the method according to the invention.

### DETAILED DESCRIPTION

### Architecture

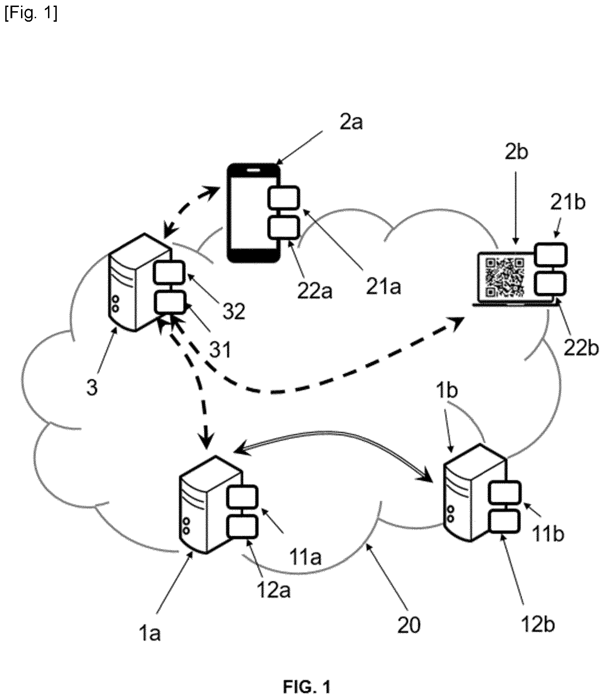

According to a first aspect, the present invention concerns a method for direct account-to-account payment from a first account of a user (the buyer) to a second account of a merchant, in a system as represented by **figure 1****.**

As explained, by account-to-account payment (A2A) it is meant a direct bank transfer without any payment instruments such as coins, cards, cheques, etc., between a user (a buyer) and a merchant resp. the collector of the merchant, for instance in-store or in e-commerce.

This transfer itself is actually done through existing mechanisms such as SEPA (Single Euro Payments Area) in the Euro zone, and the present method focuses on the user experience for triggering the transfer without manual inputs.

In other words, the present method triggers a transfer of a given amount of money corresponding to an exchange of goods/services from the account of the user at a first bank (first account) to the account of the merchant at a second bank (second account). The first and second banks could be the same bank or different banks.

As shown in Figure 1, there is a payment server 3 for performing said method, a mobile terminal 2a of the user (such as a smartphone) and a payment terminal 2b of the merchant (generally a POS, but possibly another mobile terminal such as a smartphone). Generally, the terminal 2b is located in the merchant's store, which is visited by the user carrying their mobile terminal 2a.

The first bank operates a first server 1a and the second bank operates a second server 1b. Again, the servers 1a, 1b could be the same server if the first bank is the same as the second bank.

Equipment 1a, 1b, 2a, 2b, 3 are connected through a network 20 such as internet. They all present a data processing unit 11a, 11b, 21a, 21b, 31 (a processor) and a data storage unit 12a, 12b, 22a, 22b, 32 (a memory).

The terminals 2a, 2b usually comprises means for a short-range communication, for instance to initiate the payment directly when the user in the merchant's shop.

This short-range communication could be of various nature, such as a near-field communication (NFC), a Bluetooth communication, or an optical communication. Note that it is not necessarily bidirectional.

In a preferred and very simple embodiment, the short-range communication is a monodirectional communication from the payment terminal 2b to the mobile terminal 2a, the corresponding means are a screen of the payment terminal 2b (for displaying an optical signal such a QR code) and a camera of the mobile terminal 2a (for acquiring this optical signal).

The payment server 3 is typically a server of a trusted third party referred to as Payment Initiation Service Provider (PISP), i.e. an acquirer, for managing the A2A payment on the behalf of the merchant and user. Note that it could also be the same server as one the bank servers 1a, 1b. Finally, there may be a third bank, backing the PISP.

### Method

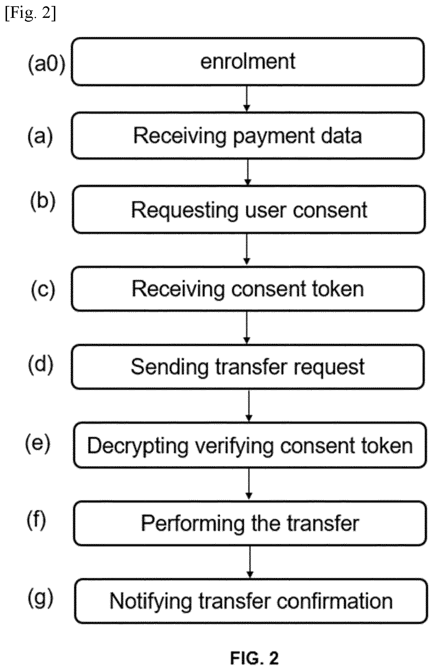

With reference to **Figure 2****,** the present method is implemented by the data processing unit 31 of the payment server 3, and begins with a known step (a) of receiving, from the payment terminal 2b and/or the mobile terminal 2a, payment data comprising at least at amount and an identification of the second account (of the merchant), such as an account number.

For instance, the user has made a purchase and wishes to pay the merchant by transferring to the second account the corresponding amount of money.

According to a preferred embodiment, the payment data are received from the mobile terminal 2a, for the user to have control over these data and to prevent that a different amount that the expected amount is fraudulently sent.

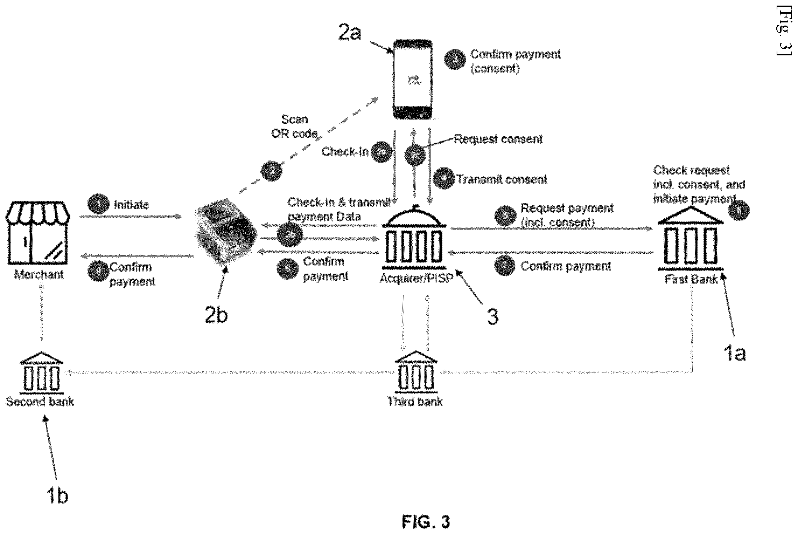

The user may directly input the data on the mobile terminal 2a, but advantageously the data is transferred from the payment terminal 2b to the mobile terminal 2a via said short-range communication, such as optical communication. Various communications, including said short range communication are visible on **figure 3** which depicts a preferred embodiment (short range is dotted line).

For instance, identification of the second account can be stored in the payment terminal 2b, and the amount can manually be inputted by the merchant like for any usual transaction (action 1 of figure 3). The inputted amount can be displayed by the payment terminal 2b so that the user can see it and assess it.

Then, said payment data can be encoded in particular in an optical signal such a QR code, which is also displayed by the payment terminal 2b. The user can then scan it with the mobile terminal 2a, which is able to decode it (operation 2 of figure 3). Alternatively, in the case of NFC or Bluetooth, the payment data is transferred by approaching the mobile terminal 2a towards the payment terminal 2b. In addition, the QR code may encode data for reaching the server 3, for instance login data.

Preferably, when the payment data is received by the payment server 3 from the mobile terminal 2a (operation 2a of figure 3), step (a) may further comprises checking the payment data with the payment terminal 2b, for instance to be sure that the user does not have tampered with it.

In particular, this checking comprises contacting the payment terminal 2b directly (via the network 20) and requesting verification of at least parts of the payment data (for instance the second account, to prevent that money is actually sent to a wrong account) and/or requesting additional payment data (operation 2b of figure 3).

Note that alternatively, payment data can be directly received by the server 3 from the payment terminal 2b, for example after it has been visually assessed by the user. In such a case, the QR code can simply encode just said data for reaching the server 3.

It is also possible that the payment data is received from both the mobile terminal 2a and the payment terminal 2b, so that the processing unit 31 of the payment server 3 can compare the received data to be sure that there is no discrepancy, and hence no fraud.

It is also possible that parts of the payment data are received from each of the mobile terminal 2a and the payment terminal 2b, for instance the amount from the mobile terminal 2a and the identification of the second account from the payment terminal 2b.

The present method is not limited to any strategy, as long as the payment data is somehow received at the payment server 3 for being processed.

In a new step (b), the server 3 requests, at the mobile terminal 2a, consent of the user to perform the payment (operation 2c of figure 3). To rephrase, the server 3 sends to the payment terminal 2a of the user a request for a proof of consent of the user. This request is typically intended to be processed by a known eID (electronic identification) app installed on the mobile terminal 2a, i.e. a digital solution for proof of identity of the user.

Indeed, the present method aims at avoiding the redirection to a banking page while complying with the requirements for secured authentication, by delegating to the payment server the "e-banking" part. As it will be shown, all of the present method can be performed through the eID app, without needing to open a separate bank app or page. The mobile terminal 2a (and in particular the eID app) can store at least one predefined identification of the first account of the user (such as the account number).

The idea is that there is an established trust between the mobile terminal 2a (e.g. digital identity scheme) and the participating banks through the server 3, both on a technical level (e.g. by using a PKI infrastructure) and also on a contractual level (allowing the bank to delegate the SCA).

To this end, step (b) preferably further comprises requesting, the user to authenticate on the mobile terminal 2a to prove consent to perform the payment (operation 3 of figure 3). To rephrase, the mobile terminal 2a receives the request for a proof of consent of the user, and this triggers requesting authentication of the user. In other words, consent can be assumed if the user willingly authenticates on the mobile terminal 2a.

Thus, a message can be displayed/read to the user inviting to confirm identity on the mobile terminal 2a if he wishes to further proceed with the A2A payment.

This is perfectly secured as:
- in case of a spoofing attempt, an attacker will not be able to prove consent of the legitimate user, as authentication attempts will fail;
- in case of a mistake in good faith, the user can simply decline the payment by not authenticating.

Said authentication is preferably a strong authentication (the mobile terminal 2a being a first authentication factor), and even preferably a biometric authentication, wherein the user is required to present a biometric trait on the mobile terminal 2a, such as face recognition, fingerprint scanning, etc. Note that the user may else simply type a PIN code.

Then, in a step (c), the mobile terminal 2a replies to the request by transmitting to the server 3 a "consent token" (operation 4 of figure 3). Obviously, this consent token is provided as function of the result of step (b), i.e. if the user consents to the payment. Else, the method stops (and the A2A payment is rejected).

By consent token, it is meant a cryptographic proof of the user's consent to the transaction. Thus, said consent token contains at least the identification of the first account. It is generated by the data processing unit 21a of the mobile terminal 2a (by inserting the data in a container), and signed by the mobile terminal 2a, in particular by the eID app. To rephrase, the consent token is preferably signed using a private key of the eID app installed on the mobile terminal 2a (which implements the authentication). Said key is part of a pair of a private key and the corresponding public key of the eID app in a known asymmetric cryptography scheme for signature. That prevents spoofing even if a genuine consent token was intercepted by a fraudulent user.

Note that the signature may in some cases be actually generated by a backend server, on the behalf on the mobile terminal 2a, but it shall anyway be considered that the token is "signed by the mobile terminal" as this is mere delegation, the action is still under the full control of the mobile terminal 2a (and in particular the eID app which is installed on this terminal) and allows to prove that the consent token originates from the mobile terminal 2a.

Furthermore, said token is preferably encrypted with a public key of said first bank. Said key is again part of a pair of a public key and the corresponding private key of the first bank in a known asymmetric cryptography scheme.

To further improve security and avoid fake consent tokens, the consent token may also include a result of said strong authentication, such as a proof of successful comparison of a candidate biometric data inputted by the user of the mobile terminal 2a (a fresh data) and a reference biometric data (the expected data), in particular in the case of an encrypted token to prevent the disclosure of personal data.

Alternatively or in addition, the consent token may also include an access token, i.e. a token contains the security credentials for a login session, typically provided by the first server 1a (of the first bank). An access token can generally be used only once, and is kept secret, so that the first bank can later trust the consent token.

At the end of step (c), the payment server 3 has received:
- the amount and the identification of the second account (in the payment data)
- the identification of the first account (in the consent token)

In order words, there are all data required to performed an ordinary A2A transfer such as a SEPA credit transfer, even if the consent token is still encrypted (and thus the identification of the first account is still hidden, which avoids any possibility of leak).

Therefore, the method comprises a step (d) (still performed by the processing unit 31 of the payment server 3) of sending to the first server 1a a transfer request comprising the payment data and said consent token (operation 5 of figure 3), so that the transfer can be automatically performed in a known fashion. For security, the communication between the server 3 and the first server 1a is preferably encrypted on network level (such as SSL/TLS). As we see, neither manual input nor redirection to various pages was required at the mobile terminal 2a, while all requirements related to consent and authentication were fulfilled.

Thus, the method typically comprises performing by the data processing unit 11a of the first server 1a, some steps (e), of decrypting (if needed) and verifying said consent token, then (f), of performing the transfer from the first account as identified by the consent token to the second account as identified in the payment data (operation 6 of figure 3).

Again, step (f) is performed only if step (e) is successful, i.e. if said consent token has been verified. Else, the method is stopped (the A2A payment is rejected).

When the consent token is encrypted with a public key of said first bank, the decryption can be done using the corresponding private key of the first bank, which is held by the first server 1a, so that the verification can occur thereafter.

As the consent token has been signed by the mobile terminal 2a, said verification of the token at least comprises verification of the signature (to be certain that the consent token originates from the mobile terminal 2a), by simply using the public key of the eID app, which is freely available to the first server 1a.

The contents of the consent token can then be accessed and verified, by any technique known:
- the identification of the first account contained in the consent token can be compared with an expected identification of the first account. Indeed, as the first account is opened at the first bank, they have a list of their accounts associated with personal data such as an identifier of the user or of the mobile terminal 2a (such as its phone number);
- if the consent token includes an access token, it can be verified (in particular its authenticity and the fact that it has been used only once - as this access token has been emitted by the first bank itself);
- if the consent token includes a result of said strong authentication, it can be verified to be certain that the user has consented to the transaction.

The transfer itself can be performed in any known way. It generally involves both the first server 1a and the second server 1b, and it can still fail even if the verification of step (e) is completed, for instance if the balance of the first account is insufficient.

If the transfer is successful, the method may finally comprise a step (g) of receiving a transfer confirmation (at the payment server 3 - operation 7 of figure 3) and notifying the payment terminal 2b and/or the mobile terminal 2a (operation 8 of figure 3).

Said transfer confirmation is a reply to the transfer request of step (d) and may include transfer details. It is transmitted to at least one of (preferably both) the payment terminal 2b and/or the mobile terminal 2a such that the user and/or the merchant know(s) that the A2A payment has been done successfully. The user can then leave the store with goods acquired in exchange from the money transferred.

In case of instant payment, the transfer of money is almost immediate so that when said confirmation is received it can be assumed that the amount of money has already been debited from the first account and credited to the second account, which is really appreciated by the user and the merchant.

### Enrolment

The present method preferably comprises a previous step (a0) of enrolment (performed potentially long before the A2A payment) so as to be able to generate consent tokens. It may be triggered for instance by downloading and installing the eID app in order to be able to handle direct A2A payments.

Step (a0) comprises transmitting from the first server 1a to the mobile terminal 2a at least said identification of the first account. Preferably it also comprises transmitting access tokens (preferably a plurality) and/or the public key of the first bank.

Note that step (a0) may require further security guarantees, like being able to provide to the first server an identity document, or a data from the first bank (for instance a code received by mail). Alternatively, the enrolment could be done directly by bringing the mobile terminal 2a to a trust entity such a public authority, for example in a city hall.

### Server

According to a second aspect, the invention relates to the payment server 3 for implementing the method according to the first aspect, i.e. for direct account-to-account payment.

As explained, this payment server 3 comprises at least data processing means 31 and a memory 32, typically a PISP server.

The payment server 3 is connected through a network 20 to a first server 1a of a first bank, the mobile terminal 2a of a user and the payment terminal 2b of a merchant.

The data processing unit 31 is configured to:
- Receive, from the payment terminal 2b and/or the mobile terminal 2a, payment data for direct account-to-account payment from a first account of the user to a second account of the merchant comprising at least at amount and an identification of the second account, said first account being opened at the first bank;
- Request, at the mobile terminal 2a, consent of the user to perform the payment;
- Receive in response, from the mobile terminal 2a, a consent token, said consent token being signed by the mobile terminal (i.e. with the private key of the eID system) and optionally being encrypted with a public key of said first bank and containing at least an identification of the first account;
- Send to the first server 1a a transfer request comprising the payment data and said consent token;
- Preferably, if the transfer is successful, receive a transfer confirmation and notifying the payment terminal 2b and/or the mobile terminal 2a.

According to a third aspect, the invention proposes a system comprising said payment server 3, as well as the first server 1a, and possibly the mobile terminal 2a and/or the payment terminal 2b, connected (via the network 20).

The first server 1a also comprises a data processing unit 11a, configured to:
- Decrypt (if needed) and verify said consent token;
- perform the transfer from the first account as identified by the consent token to the second account as identified in the payment data.

### Computer program product

According to a fourth and a fifth aspect, the invention relates to a computer program product comprising code instructions for executing (on the data processing means 31 of the payment server 3) a method according to the first aspect of the method for direct account-to-account payment from a first account of a user to a second account of a merchant; as well as storage means readable by computer equipment (for example the data storage unit 32 of the payment server 3) on which this computer program product is found.

## Claims

1. A method for direct account-to-account payment from a first account of a user to a second account of a merchant, said first account being opened at a first bank operating a first server (1a), characterized it comprises performing, by a data processing unit (31) of a payment server (3) connected through a network (20) to the first server (1a), a mobile terminal (2a) of the user and a payment terminal (2b) of the merchant, steps of:
(a) Receiving, from the payment terminal (2b) and/or the mobile terminal (2a), payment data comprising at least at amount and an identification of the second account;
(b) Requesting, at the mobile terminal (2a), consent of the user to perform the payment;
(c) Receiving in response, from the mobile terminal (2a), a consent token, said consent token being signed by the mobile terminal (2a) and containing at least an identification of the first account;
(d) Sending to the first server (1a) a transfer request comprising the payment data and said consent token.

2. A method according to claim 1, wherein said payment data are received at step (a) from the mobile terminal (2a).

3. A method according to claim 2, wherein step (a) comprises transferring said payment data from the payment terminal (2b) to the mobile terminal (2a) via a short-range communication, in particular an optical communication.

4. A method according to claim 3, wherein said payment data is displayed at the payment terminal (2b) encoded in a QR code, which is scanned by the mobile terminal (2a).

5. Method according to one of claims 2 to 4, wherein step (a) further comprises checking the payment data with the payment terminal (2b).

6. A method according to any one of claims 1 to 5, wherein step (b) comprises requesting the user to authenticate on the mobile terminal (2a) to prove consent to perform the payment.

7. Method according to claim 6, wherein said consent token is generated by the mobile terminal (2a) upon strong authentication of the user.

8. A method according to claim 7, wherein said consent token further comprises a result of said strong authentication.

9. A method according to any one of claims 1 to 8, comprising a step (e), performed by a data processing unit (11a) of the first server (1a), of verifying said consent token, comprising verifying the signature.

10. A method according to claim 9, wherein verifying said consent token comprises comparing the identification of the first account contained in the consent token with an expected identification of the first account.

11. Method according to any one of claims 9 and 10, wherein the consent token is further encrypted with a public key of said first bank, step (e) firstly comprising decrypting said consent token.

12. Method according to one of any one of claims 9 to 11, comprising a step (f) performed by the data processing unit (11a) of the first server (1a), of performing the transfer from the first account as identified by the consent token to the second account as identified in the payment data.

13. Method according to claim 12, comprising a step (g) of receiving a transfer confirmation and notifying the payment terminal (2b) and/or the mobile terminal (2a).

14. Payment server (3), characterized it comprises a data processing unit (31) configured to:
- Receive, from a payment terminal (2b) of a merchant and/or a mobile terminal (2a) of a user, payment data for direct account-to-account payment from a first account of the user to a second account of the merchant comprising at least at amount and an identification of the second account, said first account being opened at a first bank operating a first server (1a), the payment server being connected through a network (20) to the first server (1a), the mobile terminal (2a) and the payment terminal (2b);
- Request, at the mobile terminal (2a), consent of the user to perform the payment;
- Receive in response, from the mobile terminal (2a), a consent token, said consent token being signed by the mobile terminal (2a) and containing at least an identification of the first account;
- Send to the first server (1a) a transfer request comprising the payment data and said consent token.

15. System of a payment server (3) according to claim 14 and the first server (1a) of the bank, wherein the first server (1a) comprises a data processing unit (11a) configured to:
- verify said consent token;
- perform the transfer from the first account as identified by the consent token to the second account as identified in the payment data.

16. Computer program product comprising code instructions for executing a method according to one of claims 1 to 13 for direct account-to-account payment from a first account of a user to a second account of a merchant, when said program is executed on a computer.

17. A storage medium readable by computer equipment on which is recorded a computer program product comprising code instructions for executing a method according to one of claims 1 to 13 for direct account-to-account payment from a first account of a user to a second account of a merchant.
